# EUROPÄISCHE PATENTSCHRIFT

(11) **EP 1 979 205 B1**
(45) Veröffentlichungstag und Bekanntmachung des Hinweises auf die Patenterteilung: **03.11.2010**
(21) Anmeldenummer: 06829230.9
(22) Anmeldetag: 01.12.2006
(51) Int. Cl.: B60R 21/215

(54) **AIRBAGABDECKUNG**
AIRBAG COVERING
CAPOT POUR AIRBAG

(30) Priorität: 02.02.2006 DE 102006004684
(43) Veröffentlichungstag der Anmeldung: 15.10.2008
(73) Patentinhaber: PEGUFORM GMBH, 79268 Bötzingen (DE)
(72) Erfinder: GRÜNER, Engelbert, 92339 Beilngries (DE)
(74) Vertreter: Neunert, Peter Andreas
(86) Internationale Anmeldenummer: PCT/EP2006/011549
(87) Internationale Veröffentlichungsnummer: WO 2007/087853

(56) Entgegenhaltungen:
- EP-A1- 1 151 898
- WO-A-01/79040
- WO-A-2005/068268
- DE-U1- 29 511 172
- US-B1- 6 533 312

## Beschreibung

Die vorliegende Erfindung betrifft eine Airbagabdeckung für einen innerhalb eines Aufnahmeraums einer Innenraumverkleidung angeordneten Airbag eines Kraftfahrzeugs, wobei eine Öffnungsklappe, die im geschlossenen Zustand der Airbagabdeckung über Sollbruchstellen mit der Innenraumverkleidung verbunden ist, flächig an einer Scharnierklappe angeordnet ist.

Aus der DE 199 40 984 A1 ist eine als integrierter Bestandteil einer Instrumententafel ausgebildete Airbagabdeckung bekannt, bei der eine Scharnierplatte eines Airbagdeckels vollflächig mit der Unterseite der Instrumententafel verbunden und unterhalb der Scharnierplatte ein Schusskanal vorgesehen ist, der zusammen mit der Scharnierplatte als einstückiges, aus zwei Komponenten bestehendes Integralteil ausgebildet ist.

Bei einer solchen Anordnung besteht die Instrumententafel üblicherweise aus einer mit einem Halbhartschaum hinterschäumten Außenhaut, die die Oberfläche der Instrumententafel zum Fahrgastraum bildet, und einem Träger, der die Basis für die hinterschäumte Außenhaut bildet. Die Außenhaut besteht üblicherweise aus einem Kunststoff, der bei tieferen Temperaturen bruchgefährdet ist und zur Splitterbildung neigt. Dies hat zur Folge, dass beim Öffnen der Airbagklappe insbesondere im Bereich der Scharnierachse, wo die Außenhaut der Instrumententafel gestaucht wird, eine erhöhte Gefahr zur Splitterbildung besteht, wobei durch die Ablösung von Bruchstücken der Außenhaut die Insassen des Kraftfahrzeugs gefährdet werden.

In der DE 199 58 865 A1 und der DE 103 07 964 A1 werden Airbagabdeckungen beschrieben, die Trägerschichten aufweisen, die in einem Abdeckbereich des Airbags mit Sollbruchlinien ausgebildet sind, wobei der beim Aufprall des expandierenden Airbags sich lösende Airbagdeckel über Verbindungslaschen aus einem hochelastischen Kunststoff entweder mit der Instrumententafel oder einem Holm der tragenden Struktur des Fahrzeugs verbunden ist. Die Verbindungslasche besitzt eine ausreichende Länge, um zu verhindern, dass beim Öffnen der Airbagklappe die Außenhaut der Instrumententafel gestaucht wird und es so zur Splitterbildung kommt. Derartige Anordnungen haben jedoch ein begrenztes Einsatzgebiet, denn sie können nur bei verhältnis mäßig leichten Airbagklappen, wie sie beispielsweise bei ausschließlich im Spritzgussverfahren hergestellten Instrumententafeln vorzufinden sind, zuverlässig eingesetzt werden. Wird die Airbagklappe aufgrund eines hochwertigen Materialaufbaus durch Trägermaterial, Schaum und eine äußere Formhaut schwerer, so bieten nur metallische Scharniere eine ausreichende Sicherheit. Bisherige Lösungen sahen daher eine Blechverstärkung als Splitterschutz für die Airbagklappe vor, wobei auch die Scharnierfunktion von diesem Blechdeckel übernommen wurde. Eine Hubbewegung des Airbagdeckels zur Vermeidung von Splitterbruch im Scharnierbereich der Instrumententafel hat man dadurch erreicht, dass die zweite Scharnierplatte mit Nieten am Schusskanal angebunden wird, wobei diese Nieten in Langlöchern aufgenommen wurden, die bei der Entfaltung des Airbags eine kontrollierte Gleitbewegung der Scharnierplatte relativ zum Schusskanal ermöglichten.

Solche Ausführungen haben jedoch den Nachteil, dass sie aus zahlreichen Einzelteilen aufgebaut sind, was zu einem erheblichen Montageaufwand führt, der zudem aufgrund seiner Sicherheitsrelevanz umfassend überwacht und dokumentiert werden muss.

In der WO 2005/068268 A2 wird eine Airbaganordnung beschrieben, die eine Airbagabdeckung aufweiset, die über eine Dehnungsfalte mit dem Innenverkleidungsbauteil so verbunden ist, dass beim Entfalten des Airbags die Airbagabdeckung in Richtung Fahrzeuginnenraum verschoben werden kann, womit die Gefahr der Splitterbildung beim schlagartigen Öffnen der Airbagabdeckung verringert wird. Ein Nachteil dieser Anordnung besteht darin, dass die Abdeckplatte beim Entfalten des Airbags in Richtung des Fahrzeuginnenraums sehr stark beschleunigt wird, was die Gefahr mit sich bringt, dass die Airbagabdeckung abreißt und dabei in den Innenraum geschleudert wird, so dass Fahrzeuginsassen verletzt werden können.

Der Erfindung liegt somit die Aufgabe zugrunde, eine Airbagabdeckung zur Verfügung zu stellen, bei der die vorgenannten

Nachteile nicht auftreten. Diese Aufgabe wird erfindungsgemäß mit einer Airbagabdeckung mit den Merkmalen des Anspruchs 1 gelöst.

Vorteilhafte Ausführungsformen der erfindungsgemäßen Airbagabdeckung sind in den Unteransprüchen wiedergegeben.

Ausgehend von einer gattungsgemäßen Airbagabdeckung für einen Aufnahmeraum für einen Airbag im Bereich der Innenraumverkleidung eines Kraftfahrzeugs, wobei die Öffnungsklappe über Sollbruchstellen mit der Innenraumverkleidung und gleichzeitig flächig mit einer Scharnierklappe einer Scharnierplatte verbunden ist, ist erfindungsgemäß vorgesehen, dass die Scharnierplatte eine Dehnungsfalte aufweist, wodurch beim Öffnen der Airbagabdeckung eine Verschiebung der Scharnierklappe mitsamt der Öffnungsklappe in Richtung Fahrzeuginnenraum ermöglicht wird. Dabei ist vorgesehen, dass die Scharnierplatte über ein Basiselement mit einem als Rahmenteil ausgebildeten Schusskanal verbunden ist und so mit dem Schusskanal ein kombiniertes Bauteil ausbildet. Das kombinierte Bauteil aus Schusskanal und Scharnierplatte ist üblicherweise unmittelbar hinter der Innenraumverkleidung angeordnet, wobei die Scharnierklappe, die den Schusskanal abdeckt, mit der Innenraumverkleidung direkt verbunden oder integraler Bestandteil der Innenraumverkleidung ist. Das Basiselement der Scharnierplatte ist mit dem den Schusskanal bildenden Rahmenteil verbunden und bildet eine Wand des Schusskanals. Die Verbindung der Scharnierplatte mit der Karosserie oder anderen Bauteilen des Kraftfahrzeugs zur Befestigung des gesamten Airbagmoduls erfolgt über das vorgenannte Rahmenteil.

Während die Befestigung der Scharnierplatte im Bereich der Scharnierklappe vollflächig mit der Innenraumverkleidung vorgesehen ist, ist das Basiselement der Scharnierplatte lediglich an seinem äußeren Ende fest mit dem als Schusskanal ausgebildeten Rahmenteil verbunden. Zwischen den Verbindungsstellen der Scharnierplatte mit dem Rahmenteil und der Öffnungsklappe liegt das Basiselement der Scharnierplatte ungebunden vor und kann somit bei Vorhandensein einer Dehnungsfalte in Richtung Fahrgastinnenraum verschoben werden. Beim Aufbrechen der Öffnungsklappe des Airbags durch den sich entfaltenden Airbag bewirkt der Öffnungsdruck gleichzeitig, dass die gesamte Öffnungsklappe mitsamt Scharnierklappe um den Betrag, den die zur Scharnierachse parallel angeordnete Dehnungsfalte ausmacht, in Richtung Fahrgastinnenraum verschoben wird.

Beim Aufbrechen der Außenhaut der Airbagabdeckung bzw. Instrumententafel kommt es nun nicht mehr zu Stauchungen im Bereich der Scharnierachse, die zu Materialabsplitterungen führen können. Vielmehr reißt die über Sollbruchstellen mit der Innenraumverkleidung verbundene Öffnungsklappe vollständig ab und wird nun durch die Scharnierplatte festgehalten. Aufgrund der parallel zur Scharnierachse angeordneten Dehnungsfalte verschiebt sich dabei die Scharnierklappe mit Öffnungsklappe um den Betrag der Dehnungsfalte in Richtung Fahrgastraum.

Eine derartige Airbagabdeckung mit integrierter Airbagklappe und Modulanbindung kann beispielsweise beim Spritzgießprozess des Trägers für die Instrumententafel direkt eingebracht werden. Scharnier und Rahmenteil bestehen aus einem Einlegeteil, wobei die genannten Bauteile in ihren Oberflächen Öffnungen zur Gewichtsreduzierung enthalten können. Das System ist so konstruiert, dass der Scharnierdeckel bei der Airbagentfaltung sich aus dem Instrumententafelverbund löst und eine Relativbewegung zwischen Deckel und Umgebung ausführt. Hierbei bewegt sich der Scharnierdeckel zuerst in Richtung des sich ausbreitenden Luftsackes, um damit ein unkontrolliertes Eindringen der Abdeckung in angrenzende Bereiche zu verhindern. Die der abgewinkelten Länge der Dehnungsfalte entsprechende Hublänge ist dabei abhängig vom Aufbau der Instrumententafel im Bereich der Airbagabdeckung, d.h. sie muss mindestens der Dicke des Gesamtaufbaus der Airbagabdeckung entsprechen. Diese linear translatorische Bewegung kann mittels geeigneter Dämpfungselemente gezielt gesteuert werden. Anschließend erfolgt eine rotatorische Bewegung um die Scharnierachse. Die Scharnierachse ist vorteilhaft geometrisch so gestaltet, dass ihre Achse entlang einer definierten Ausdünnung (Sollbruchstelle) im Träger führt.

Eine vorteilhafte Ausführungsform der vorliegenden Erfindung sieht vor, dass die Scharnierplatte mitsamt Rahmenteil als Blechbiegeteil ausgeführt ist, wobei die Scharnierklappe als Deckelblech den Schusskanal abdeckt und dabei fest mit der Rückseite der Instrumententafel verbunden ist. Die Verbindung zwischen Scharnierklappe und Instrumententafel kann durch mechanisches Verrasten, Schrauben, Nieten, Kleben und Verschweißen erfolgen. Eine elegante Befestigungsmöglichkeit besteht darin, die Scharnierklappe direkt zu umspritzen. Hierbei kann die Scharnierklappe Öffnungen aufweisen, in die beim Umspritzen das Kunststoffmaterial des Trägers der Instrumententafel eindringt und dadurch als zusätzliche Verankerung dient.

In einer weiteren vorteilhaften Ausführung wird das Rahmenteil ebenfalls mit Kunststoff umspritzt und bildet dann mit dem Kunststoff den Schusskanal. Das umspritzte Rahmenteil und die Scharnierplatte können, wie oben beschrieben, aus Blech geformt sein, sie können aber auch aus verstärktem thermoplastischen oder duroplastischen Kunststoff hergestellt sein. In besonderen Fällen kann es jedoch auch vorteilhaft sein, die Scharnierklappe aus einem elastischen Kunststoff herzustellen. Je nach Ausführungsform kann die Verbindung zwischen Scharnierplatte und Rahmenteil durch Verschweißen, Kleben, direktes Einformen und Aufpressen erfolgen. Dadurch können zwei wesentliche Vorteile ausgenutzt werden: Beim Umspritzen kann das kombinierte Bauteil aus Scharnierplatte und Rahmenteil direkt in einem Arbeitsgang in das Spritzgusswerkzeug eingelegt werden. Zum anderen wird bei dieser Ausführungsvariante die Dehnungsfalte abgedeckt, so dass kein Kunststoffmaterial in die Dehnungsfalte gelangen kann.

Weitere Möglichkeiten zur Befestigung des Basiselements der Scharnierplatte mit dem Schusskanal sind durch Vernieten oder Verschrauben gegeben.

Die Dehnungsfalte oder auch Hubschlaufe im Basiselement der Scharnierplatte ist erfindungsgemäß zwischen den Befestigungen der Scharnierplatte mit dem Schusskanal und der Öffnungsklappe vorgesehen. Bei einer bevorzugten Ausführungsform ist die Dehnungsfalte parallel zur Scharnierachse unmittelbar in Nachbarschaft zur Befestigung des Basiselements der Scharnierplatte mit dem Schusskanal vorgesehen.

Neben metallischen Werkstoffen können für die Scharnierplatte auch elastische, aber auch faser- und/oder gewebeverstärkte Kunststoffe eingesetzt werden.

Um das Öffnungsverhalten der Airbagabdeckung weiter zu verbessern, sind bei einer vorteilhaften Ausführungsform im Bereich der Dehnungsfalte Maßnahmen zur Dämpfung der Bewegung der Scharnierplatte in Richtung des Fahrzeuginneren vorgesehen. Geeignete Maßnahmen dafür sind beispielsweise Defoelemente, Rundschnüre, Sicken und/oder Verprägungen, die entlang der Dehnungsfalte angeordnet sind. Hierdurch wird die durch die Dehnungsfalte ermöglichte Bewegung der Scharnierplatte in Richtung Fahrzeuginneres gedämpft und damit das Aufreißen der Airbagöffnung gesteuert und ein unkontrolliertes Eindringen der sich öffnenden Airbagöffnung in die Haut der Instrumententafel in der Umgebung der Öffnung verhindert. Durch die Dämpfungselemente werden zudem die Beschleunigung und die Geschwindigkeit des Deckels und die dadurch hervorgerufenen Reaktionskräfte minimiert.

Eine vorteilhafte Ausführungsform sieht vor, dass die Konstruktionselemente des Schusskanals im Wesentlichen winkelprofile umfassen, die mit Ösen und/oder Bohrungen bzw. Öffnungen zur Gewichtsreduzierung versehen sind. Diese Elemente sind relativ einfach herzustellen und können optimal zur Befestigung der Scharnierplatte bzw. an Bauteilen der Fahrzeugkarosserie eingesetzt werden.

Auch wenn die erfindungsgemäße Airbagabdeckung bevorzugt im Bereich der Instrumententafel eingesetzt wird, wobei die Öffnungsklappe integraler Bestandteil eines hinterschäumten Bauteils dieser Instrumententafel ist, so kann das Prinzip der Airbagabdeckung dennoch problemlos auf einen Seitenairbag, der in der Innenverkleidung der Tür angebracht ist, oder auch einen Airbag, der in einem Holm vorgesehen ist, übertragen werden.

Bei der erfindungsgemäßen Airbagabdeckung fungiert die Scharnierklappe als Auftreffplatte für den Airbag, während das Basiselement der Scharnierplatte einen Teil des Schusskanals ausbildet. Die Scharnierplatte weist eine Scharnierachse auf, die in Form einer Sicke und/oder Prägung zwischen dem Basiselement der Scharnierplatte und der Scharnierklappe ausgebildet ist.

Die besonderen Vorteile der vorliegenden Erfindung sind einmal damit begründet, dass bei der Ausgestaltung der Airbagabdeckung als Blechbiegeteil - bestehend aus einem Rahmenteil mit Anschraublaschen zur Modulanbindung und einem Deckelblech mit Scharnier - Rahmenteil und Deckelblech als Armierung des Trägers bei der Airbagentfaltung dienen. Ein weiterer Vorteil besteht darin, dass es bei dieser Art der Airbagabdeckung leicht möglich ist, das Airbagmodul direkt an der Instrumententafel zu befestigen und eine zusätzliche Abstützung des Airbagmoduls an einem Querträger oder am Rohbau des Fahrzeuges nicht mehr notwendig ist. Hinzu kommt, dass die Dehnungsfalte (Hubschlaufe) im Airbagsystem unterhalb der Airbagaustrittsöffnung angeordnet ist, wobei die Blechteile vorteilhaft bündig im Kunststoff eingebettet sind, was eine mögliche Verletzungsgefahr des Luftsackes an den Blechteilen ausschließt.

Im Folgenden wird die vorliegende Erfindung anhand von Abbildungen näher erläutert. Dabei zeigen
- Figur 1: eine perspektivische Darstellung eines Bauteils aus Scharnierplatte und Rahmenteil,
- Figur 2: einen Ausschnitt des Bauteils aus Figur 1,
- Figur 3: eine Schnittdarstellung der erfindungs- gemäßen Airbagabdeckung im geschlossenen Zustand und
- Figur 4: eine Schnittdarstellung der erfindungs- gemäßen Airbagabdeckung im geöffneten Zustand.

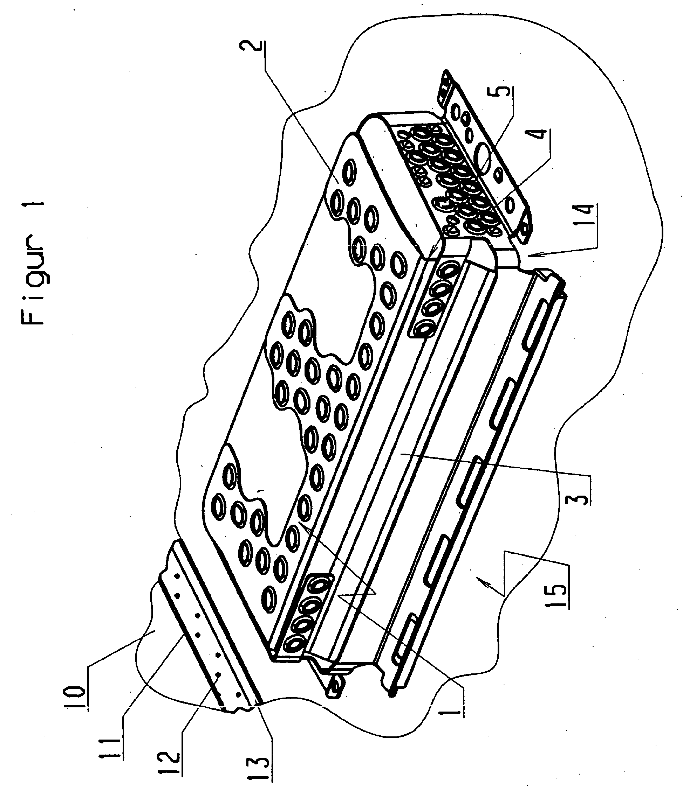

In der Figur 1 ist das Kombinationsbauteil 15 aus Scharnierplatte 1 und Rahmenteil 4 perspektivisch dargestellt. Die Scharnierplatte 1 besteht aus einer Scharnierklappe 2 und einem Basiselement 3, die über eine Scharnierachse 5 miteinander verbunden sind. Das Rahmenteil 4 und die Scharnierplatte 1 bilden gleichzeitig den Schusskanal 14 für den Airbag. Das Bauteil 15 ist üblicherweise unmittelbar hinter der Innenverkleidung 10 angeordnet, die sich beispielsweise aus einer hinterschäumten Außenhaut 11, die ins Fahrzeuginnere weist, und einem Träger 13, der zum Bauteil 15 hinweist, zusammensetzt. Die Scharnierklappe 2 ist erfindungsgemäß direkt mit dem Träger 13 der Innenraumverkleidung 10 verbunden, wobei in diesem Bereich eine Öffnungsklappe 9 ausgebildet ist, die als integraler Bestandteil der Innenverkleidung 10 über Sollbruchstellen mit derselben verbunden ist.

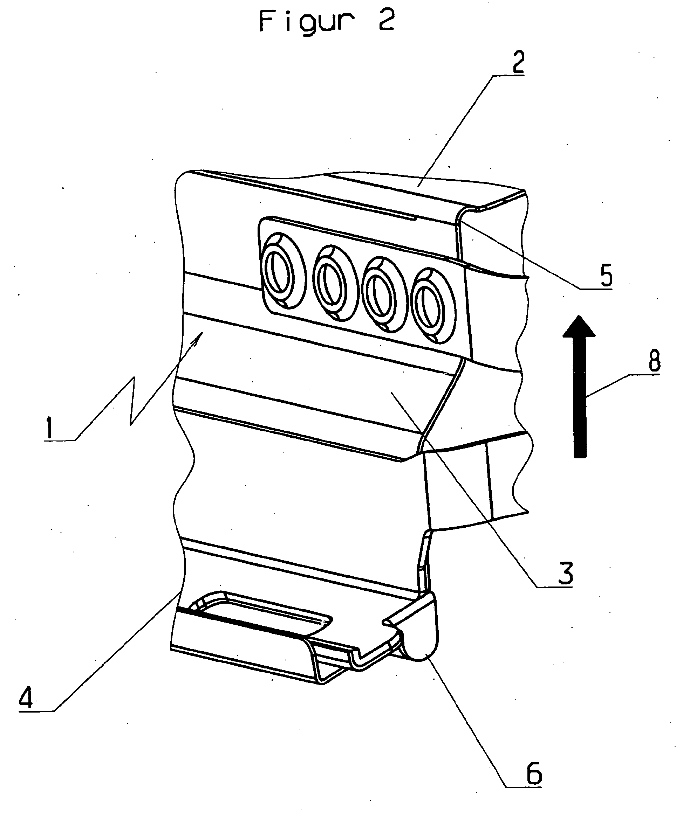

In der Figur 2, die einen Ausschnitt des Bauteils 15 aus Scharnierplatte 1 und Rahmenteil 4 wiedergibt, ist die Dehnungsfalte 6 dargestellt, die als Teil des Basiselementes 3 der Scharnierplatte 1 zwischen der Befestigung der Scharnierplatte 1 am Rahmenteil 4 sowie an der Scharnierklappe 2, parallel zur Scharnierachse 5, in unmittelbarer Nachbarschaft zur Befestigung der Scharnierplatte 1 an dem Rahmenteil 4, angeordnet ist. Die Bewegungsrichtung des sich entfaltenden Airbags ist durch den Richtungspfeil 8 wiedergegeben.

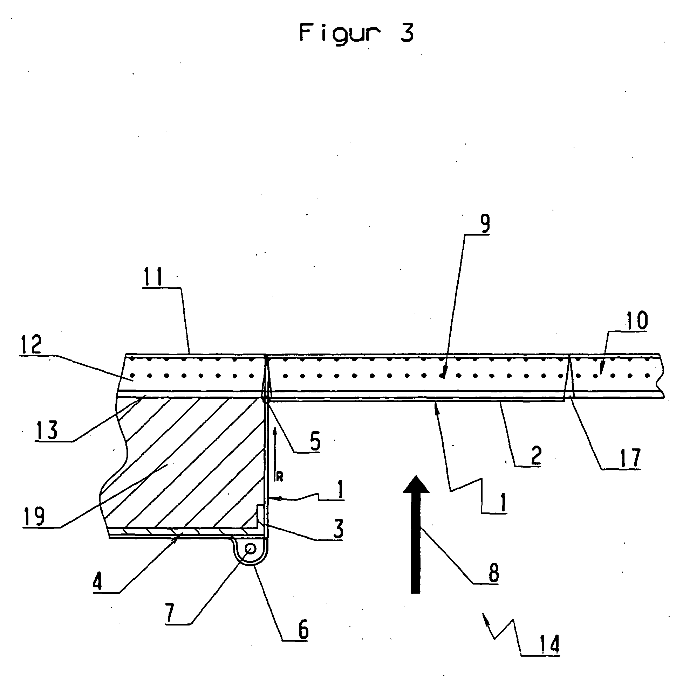

Die Figur 3 ist eine Schnittdarstellung der erfindungsgemäßen Airbagabdeckung im geschlossenen Zustand. Dabei besteht die Airbagabdeckung aus einer Öffnungsklappe 9, die als integraler Bestandteil der Innenverkleidung 10 mit dieser über Sollbruchstellen 17 verbunden ist. Die Öffnungsklappe 9 ist flächig mit der Scharnierklappe 2 der Scharnierplatte 1 verbunden, deren Basiselement 3 Teil des Schusskanals 14 ist. Unmittelbar in Nachbarschaft zur Verbindungsstelle zwischen Basiselement 3 und Rahmenteil 4 ist eine Dehnungsfalte 6 angeordnet, in die ein Dämpfungselement 7 in Form einer Rundschnur integriert ist. Die Richtung des sich entfaltenden Airbags ist mit dem Richtungspfeil 8 wiedergegeben. Die Innenverkleidung 10 ist aufgebaut aus einer mit Hartschaum 12 hinterschäumten Haut 11 und einem Träger 13.

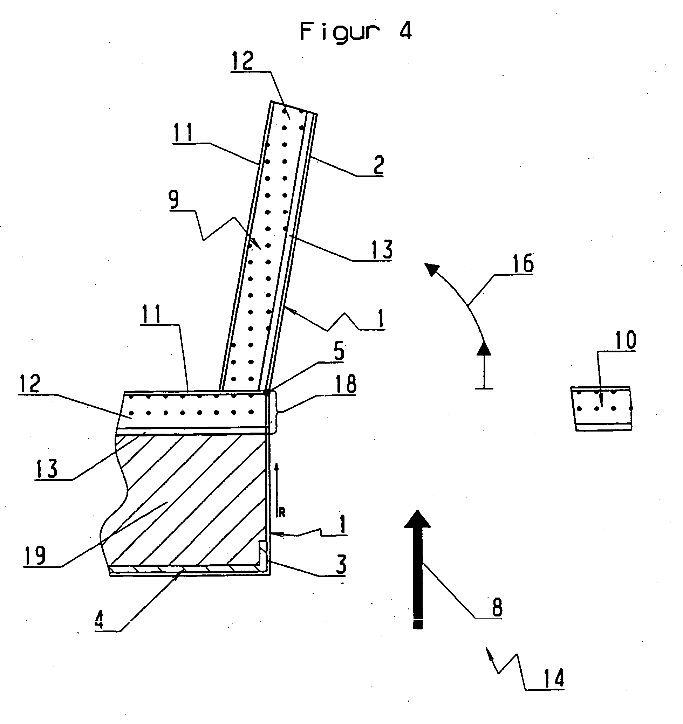

In der Figur 4 ist die Airbagabdeckung aus Figur 3 im geöffneten Zustand wiedergegeben. Die Öffnungsklappe 9 ist mitsamt der Scharnierklappe 2 um den Betrag 18 in Richtung Fahrzeuginneres verschoben, wobei der Betrag 18 der Dicke der Innenraumverkleidung 10 entspricht. Die Scharnierachse 5 befindet sich jetzt auf Höhe der Außenhaut 11 der Innenverkleidung 10. Die Öffnungsrichtung der Öffnungsklappe 9 ist durch den Öffnungspfeil 16 wiedergegeben, während die Schussrichtung des Airbags durch den Richtungspfeil 8 im Schusskanal 14 wiedergegeben ist. Das Basiselement 3 liegt im geöffneten Zustand der Airbagabdeckung vollständig am Rahmenteil an, wobei die Dehnungsfalte 6 vollständig ausgenutzt wurde, um die Öffnungsklappe in das Fahrzeuginnere zu verschieben. Auf die Darstellung der Rundschnur als Dämpfungselement 7 wurde in dieser Abbildung verzichtet.

### Bezugszeichenliste

- 1: Scharnierplatte
- 2: Scharnierklappe
- 3: Basiselement (Scharnierplatte)
- 4: Rahmenteil
- 5: Scharnierachse
- 6: Dehnungsfalte
- 7: Dämpfungselement
- 8: Bewegungsrichtung Airbag
- 9: Öffnungsklappe
- 10: Innenverkleidung
- 11: Außenhaut (Innenverkleidung)
- 12: Schaum (Innenverkleidung)
- 13: Träger (Innenverkleidung)
- 14: Schusskanal
- 15: Kombinationsbauteil
- 16: Öffnungsrichtung (Öffnungsklappe)
- 17: Sollbruchstelle
- 18: Hublänge.

## Patentansprüche

1. Airbagabdeckung, insbesondere für einen innerhalb eines Aufnahmeraums einer Innenraumverkleidung (10) angeordneten Airbag eines Kraftfahrzeugs, mit
- einer im geschlossenen Zustand der Airbagabdeckung über Sollbruchstellen (17) mit der Innenraumverkleidung (10) verbundenen Öffnungsklappe (9),
- einer Scharnierplatte (1), die über eine Scharnierklappe (2) flächig mit der Öffnungsklappe (9) verbunden ist, und
- einem als Rahmenteil (4) für die Scharnierplatte (1) ausgebildeten Schusskanal (14), der über ein Basiselement (3) mit der Scharnierplatte (1) verbunden ist und mit dieser zusammen ein kombiniertes Bauteil (15) ausbildet, wobei
die Scharnierplatte (1) parallel zu einer Scharnierachse (5) eine Dehnungsfalte (6) aufweist, wobei die Scharnierplatte (1) beim Aufklappen der Airbagabdeckung in Richtung Fahrzeuginnenraum verschiebbar ist, **dadurch gekennzeichnet, dass**
im Bereich der Dehnungsfalte (6) Maßnahmen zur Dämpfung der Bewegung der Scharnierplatte (1) in Richtung Fahrzeuginnenraum vorgesehen ist, wobei
als Maßnahmen zur Dämpfung der Bewegung der Scharnierplatte (1) zumindest ein Dämpfungselement (7), wie z.B. ein Defoelement, eine Rundschnur oder Sicken und/oder Verprägungen, vorgesehen ist.

2. Airbagabdeckung nach Anspruch 1,
**dadurch gekennzeichnet, dass** die Dehnungsfalte (6) im Bereich zwischen der Befestigung der Scharnierplatte (1) mit dem Rahmenteil (4) und der Öffnungsklappe (9), vorzugsweise in Nachbarschaft der Verbindung zwischen Scharnierplatte (1) und Rahmenteil (4), vorgesehen ist.

3. Airbagabdeckung nach Anspruch 1 oder 2,
**dadurch gekennzeichnet, dass** die Scharnierplatte (1) ein Metallblech ist.

4. Airbagabdeckung nach Anspruch 1 oder 2,
**dadurch gekennzeichnet, dass** die Scharnierplatte (1) aus einem elastischen und/oder einem faserverstärkten- und/oder einem gewebeverstärkten Kunststoff besteht.

5. Airbagabdeckung nach einem der Ansprüche 1 bis 4, **dadurch gekennzeichnet, dass** das Rahmenteil ein Metallblech ist.

6. Airbagabdeckung nach einem der Ansprüche 1 bis 5, **dadurch gekennzeichnet, dass** das Rahmenteil (4) aus einem elastischen und/oder einem faserverstärkten- und/oder einem gewebeverstärkten Kunststoff besteht.

7. Airbagabdeckung nach einem der Ansprüche 1 bis 6, **dadurch gekennzeichnet, dass** das Rahmenteil (4) im Wesentlichen mit Ösen und/oder Bohrungen versehene Winkelprofile als Konstruktionselemente umfasst.

8. Airbagabdeckung nach einem der Ansprüche 1 bis 7, **dadurch gekennzeichnet, dass** die Öffnungsklappe (9) integraler Bestandteil einer als hinterschäumtes Bauteil ausgeführten Instrumententafel (10) ist.

9. Airbagabdeckung nach einem der Ansprüche 1 bis 8, **dadurch gekennzeichnet, dass** der Betrag (18) der Bewegung der Scharnierplatte (1) in Richtung des Fahrzeuginneren mit der abgewickelten Länge der Dehnungsfalte (6) korrespondiert.

10. Airbagabdeckung nach einem der Ansprüche 1 bis 9, **dadurch gekennzeichnet, dass** die abgewickelte Länge der Dehnungsfalte (6) mindestens der Dicke des Gesamtaufbaus der Öffnungsklappe (9) entspricht.

11. Airbagabdeckung nach einem der Ansprüche 1 bis 10, **dadurch gekennzeichnet, dass** die Scharnierklappe (2) als Auftreffplatte für den Airbag ausgebildet ist und das Basiselement (3) der Scharnierplatte (1) einen Teil des Schusskanals (14) bildet.

12. Airbagabdeckung nach einem der Ansprüche 1 bis 11, **dadurch gekennzeichnet, dass** zwischen der Scharnierklappe (2) und dem Basiselement (3) eine Scharnierachse (5) in Form einer Sicke, Prägung und/oder Radius ausgebildet ist.

## Claims

1. An airbag covering, in particular for an airbag of a motor vehicle arranged inside a receiving space of an interior lining (10), with
- an opening flap (9) connected in the closed state of the airbag covering to the interior lining (10) by way of pre-determined breaking points (17),
- a hinge plate (1) which is connected in a flat manner to the opening flap (9) by way of a hinge flap (2), and
- a chute channel (14) which is formed as a frame part (4) for the hinge plate (1) and which is connected to the hinge plate (1) by way of a base element (3) and together with the hinge plate (1) forms a combined component (15),
wherein parallel to a hinge axis (5) the hinge plate (1) has an extension fold (6), wherein the hinge plate (1) is displaceable in the direction of the interior of the vehicle when the airbag covering is swung open, **characterized in that** means for damping the movement of the hinge plate (1) in the direction of the interior of the vehicle are provided in the region of the extension fold (6), wherein at least one damping element (7), such as for example a deformation element, a round cord or beads and/or embossed portions, is provided as means for damping the movement of the hinge plate (1).

2. An airbag covering according to claim 1, **characterized in that** the extension fold (6) is provided in the region between the fastening of the hinge plate (1) to the frame part (4) and the opening flap (9), preferably in the vicinity of the join between the hinge plate (1) and the frame part (4).

3. An airbag covering according to claim 1 or 2, **characterized in that** the hinge plate (1) is a metal sheet.

4. An airbag covering according to claim 1 or 2, **characterized in that** the hinge plate (1) consists of an elastic and/or a fibre-reinforced and/or a fabric-reinforced plastics material.

5. An airbag covering according to any one of claims 1 to 4, **characterized in that** the frame part is a metal sheet.

6. An airbag covering according to any one of claims 1 to 4, **characterized in that** the frame part (4) consists of an elastic and/or a fibre-reinforced and/or a fabric-reinforced plastics material.

7. An airbag covering according to any one of claims 1 to 6, **characterized in that** the frame part (4) substantially comprises structural elements in the form of angled profiles provided with eyelets and/or bores.

8. An airbag covering according to any one of claims 1 to 7, **characterized in that** the opening flap (9) is an integral component part of a dashboard (10) designed in the form of a foam-backed component.

9. An airbag covering according to any one of claims 1 to 8, **characterized in that** the amount (18) of the movement of the hinge plate (1) in the direction of the interior of the vehicle corresponds to the angled length of the extension fold (6).

10. An airbag covering according to any one of claims 1 to 9, **characterized in that** the angled length of the extension fold (6) corresponds at least to the thickness of the overall structure of opening flap (9).

11. An airbag covering according to any one of claims 1 to 10, **characterized in that** the hinge flap (2) is designed in the form of an impact plate for the airbag, and the base element (3) of the hinge plate (1) forms part of the chute channel (14).

12. An airbag covering according to any one of claims 1 to 11, **characterized in that** a hinge axis (5) in the form of a bead, embossing and/or radius is formed between the hinge flap (2) and the base element (3).

## Revendications

1. Capot de sac de sécurité (airbag), notamment pour un sac de sécurité de véhicule automobile, dans un logement d'un habillage d'habitacle (10), comprenant :
- un volet ouvrant (9) relié par des points de rupture de consigne (17) à l'habillage de l'habitacle (10), lorsque le capot du sac de sécurité est en position fermée,
- une plaque de charnière (1) reliée par un volet de charnière (2), en surface avec le volet ouvrant (9), et
- un canal de tir (14) réalisé sous la forme d'une partie de châssis (4) de la plaque de charnière (1), canal par lequel un élément de base (3) est relié à la plaque de charnière (1) et forme avec celui-ci une pièce combinée (15), capot dans lequel
- la plaque de charnière (1) comporte un pli d'expansion (6) parallèle à l'axe de charnière (5),
- la plaque de charnière (1) coulissant en direction de l'habitacle du véhicule lorsque le capot de sac de sécurité s'ouvre,
capot **caractérisé en ce qu'**
des moyens sont prévus au niveau du pli d'expansion (6), pour amortir le mouvement de la plaque de charnière (1) en direction de l'habitacle du véhicule, et
le moyen d'amortissement du mouvement de la plaque de charnière (1) est au moins un élément amortisseur (7) tel que par exemple un élément déformable, une cordelette périphérique ou des nervures et/ou des impressions.

2. Capot de sac de sécurité selon la revendication 1,
**caractérisé en ce que**
le pli d'expansion (6) est prévu de préférence au voisinage de la liaison entre la plaque de charnière (1) et la partie de châssis (4), dans la zone entre la fixation de la plaque de charnière (1) à la partie de châssis (4) et le volet ouvrant (9).

3. Capot de sac de sécurité selon la revendication 1 ou 2,
**caractérisé en ce que**
la plaque de charnière (1) est une tôle.

4. Capot de sac de sécurité selon la revendication 1 ou 2,
**caractérisé en ce que**
la plaque de charnière (1) est réalisée en une matière plastique élastique et/ou renforcée par des fibres et/ou renforcée par un tissu.

5. Capot de sac de sécurité selon l'une des revendications 1 à 4, **caractérisé en ce que**
la partie de cadre est une tôle.

6. Capot de sac de sécurité selon l'une des revendications 1 à 5, **caractérisé en ce que**
la partie de cadre (4) se compose d'une matière plastique élastique et/ou d'une matière plastique renforcée par des fibres et/ou d'une matière plastique renforcée par un tissu.

7. Capot de sac de sécurité selon l'une des revendications 1 à 6, **caractérisé en ce que**
la partie de cadre (4) comporte des cornières munies principalement d'oeillets et/ou de perçages constituant des éléments de construction.

8. Capot de sac de sécurité selon l'une des revendications 1 à 7, **caractérisé en ce que**
le volet ouvrant (9) fait partie intégrante d'un tableau de commande (10) réalisé comme pièce avec de la mousse expansée au dos.

9. Capot de sac de sécurité selon l'une des revendications 1 à 8, **caractérisé en ce que**
l'amplitude (18) du mouvement de la plaque de charnière (1) en direction de l'habitacle du véhicule, correspond à la longueur développée du pli d'expansion (6).

10. Capot de sac de sécurité selon l'une des revendications 1 à 9, **caractérisé en ce que**
la longueur développée du pli d'expansion (6) correspond au moins à l'épaisseur de la structure d'ensemble du volet ouvrant (9).

11. Capot de sac de sécurité selon l'une des revendications 1 à 10, **caractérisé en ce que**
le volet de charnière (2) est réalisé sous la forme d'une plaque d'impact du sac de sécurité et l'élément de base (3) de la plaque de charnière (1) constitue une partie du canal de tir (14).

12. Capot de sac de sécurité selon l'une des revendications 1 à 11, **caractérisé en ce qu'**
un axe de charnière (5) en forme de nervure d'impression et/ou de rayon est réalisé entre le volet de charnière (2) et l'élément de base (3).
